# EUROPEAN PATENT APPLICATION

(11) **EP 1 785 932 A1**
(43) Date of publication of application: **16.05.2007**
(21) Application number: 05425797.7
(22) Date of filing: 11.11.2005
(51) Int. Cl.: G06Q 30/00

(54) **Analytic tool for evaluating average revenue per user for multiple revenue streams**

(71) Applicant: Accenture Global Services GmbH, 8200 Schaffhausen (CH)
(72) Inventor: Maga, Matteo c/o Accenture S.p.A., 00142 Roma (IT); Canale, Paolo c/o Accenture S.p.A., 00142 Roma (IT); Bohe, Astrid c/o Accenture S.p.A., 00142 Roma (IT)
(74) Representative: Siniscalco, Fabio

(57) **Abstract**

An analytic tool and method for investigating and analyzing a business's revenue sources are provided. An analytic tool provides an interactive revenue decomposition tree (40) which breaks down a business's various revenue streams into their constituent components. Individual revenue sources can be analyzed on a per customer or per user basis. The tool is capable of calculating and displaying the average revenue per user (52) (ARPU) of the various products and services that comprise the sources of the various revenue streams. Actual ARPU values may be compared to forecasted values or industry averages (54) for like products or services. An ARPU gap (56) may be calculated based on the differences between the actual ARPU values (52) and the forecasted or industry average values (54). The ARPU gap (56) may provide a simple quick measure of the overall performance of a revenue stream. A user may elect to view ARPU data at various breakdown levels of the revenue decomposition tree (40). If an intermediate level is displayed, the ARPU (52), ARPU reference (54) and ARPU gap (56) are calculated and displayed for whichever level is chosen. Further, the user may filter the ARPU data by various customer attributes in order to investigate ARPU among various segments of the customer population.

## Description

### BACKGROUND

The present invention relates to an analytic tool for analyzing revenue. As a key component of profit a healthy revenue stream is essential for the success of any commercial enterprise. In order to increase profits a business must either increase revenue, cut costs, or both increase revenue and cut costs. However, whereas cost cutting has a finite limit, revenue increases are substantially unbounded. Increasing revenue is the only real long term solution for producing consistent sustained profitability increases over time. Therefore, a successful business must be ever vigilant for sources of additional revenue.

Traditionally, businesses have viewed revenue from the perspective of the products and services sold. Strong sales of products and services lead to strong revenue and, if costs are held in check, to high profitability. Poor sales lead to poor revenue and low profitability. From this perspective, increased sales are the key to increased profitability. Typically, increased sales means finding and attracting new customers. For many businesses finding new customers can present a significant challenge, especially in mature markets where new customers may be hard to come by.

The reliance on ever increasing sales to an ever expanding customer base ignores an important pool of potential additional revenue, namely a business's existing customer base. If existing customers can be induced to purchase more products or increase their use of services revenue goes up, often at much less cost than attracting new customers. Existing customers are at least somewhat known quantities. They are easier to reach than non-customers, and their consumption and usage patterns may be analyzed to determine which additional products or services may be of interest to them. Efficient targeted campaigns may be developed to contact existing customers in order to stimulate revenue growth.

The shortcomings of the traditional way of looking at revenue, i.e. from the prospective of the products and services sold, are readily apparent when one tries to identify opportunities for stimulating revenue among existing customers. Sales numbers may reflect the popularity (or lack thereof) of various products and services, but they say little about the customers themselves. How much revenue is the average customer generating for one service compared to another? How does customer revenue for particular products and services compare with industry averages? Which customers are likely to generate additional revenue in response to marketing campaign offers?

The answers to these questions and others like them can have a profound effect on the strategies businesses employ for stimulating additional revenue. To answer these and other such questions, a more customer focused view of revenue is required. For example, by considering the average revenue per user (ARPU) generated by a product or service, a business can more readily determine which of the products and services it offers provide the best opportunities for increasing revenue. Services where ARPU is low or below industry averages may be fertile ground for revenue stimulation efforts. In contrast, services where the ARPU is already high may be appropriate areas for increased sales efforts outside the existing customer base in order to attract additional high revenue customers.

Shifting the revenue focus from products and services to customers and users requires accounting systems and analysis tools which heretofore have not been available.

### BRIEF SUMMARY

The present invention relates to an analytic tool for and method of analyzing a business's revenue from a customer or user perspective. According to the invention a business enterprise's revenue stream is broken down into a plurality of narrowly defined components that relate to the enterprise's products or services. Customer and revenue Data are collected in a manner that allows the revenue generated by each customer to be assigned to an appropriate revenue component or source corresponding to the products or services the customer has purchased or used.

Based on such particularized data, it is possible to calculate the average revenue per user (ARPU) of each individual revenue component. Target or reference ARPU values may be provided for each revenue component to provide benchmarks for evaluating the revenue performance of the various components of the overall revenue stream. An ARPU gap may be calculated based on the difference between actual ARPU values and ARPU reference values. ARPU increase opportunities may be identified based on the performance of the various revenue components.

According to an embodiment of the invention, an analytic tool for analyzing a business's revenue is provided. The tool includes a data storage device adapted to receive and store customer and revenue data. A data manipulation module associated with the data storage device derives calculated values from data stored in the data storage device, including for example, the average revenue per user of products or services sold by the business. An interface device is provided for interacting with a user and displaying data including the calculated values stored in the data storage device. The interface device is adapted to display a diagnostic tree representing the business's revenue stream decomposed into a plurality of contributory revenue components. A calculated value such as the average revenue per user associated with the revenue generated from the contributory components of the revenue stream is displayed in association with the revenue component from which it was derived.

According to another embodiment, a revenue analysis tool is provided which includes a data storage device for storing customer and revenue data. An access module adapted to receive data from the data storage device is also provided. The access module includes a processor and processing instructions for generating a diagnostic tree representing an enterprise's revenue sources. The diagnostic tree includes average revenue per user values for various revenue sources. The access module further includes an interface for displaying the diagnostic tree and allowing a user to select portions of the diagnostic tree to be displayed. Average revenue per user values are calculated and displayed for revenue sources contained in the portion of the diagnostic tree selected to be displayed.
Finally, a method of analyzing a business's revenue is provided. The method includes constructing a diagnostic tree depicting an enterprise's revenue sources. The various revenue streams are divided into a plurality of separate narrower revenue components that reflect the products or services from which the revenue is generated. Customer and revenue data are received from various operating systems. The revenue data are allocated to appropriate revenue components of the diagnostic tree based on customer use of the products or services associated with various revenue components. An average revenue per user (ARPU) value may be calculated from the allocated revenue for each revenue component of the diagnostic tree. At least a portion of the diagnostic tree is displayed for a user. The user may use the displayed data to evaluate the ARPU performance of the various revenue components displayed in the diagnostic tree.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

Fig. 1 is a block diagram of a system for providing a customer based analytic tool for analyzing revenue.

Fig. 2 is a diagnostic tree for analyzing the average revenue per user among a plurality of revenue streams;

Fig. 3 is a portion of fully developed six level diagnostic tree for analyzing the average revenue per user of a telecommunications service provider.

Fig. 4 is another portion of fully developed six level diagnostic tree for analyzing the average revenue per user of a telecommunications service provider.

Fig. 5 is another portion of fully developed six level diagnostic tree for analyzing the average revenue per user of a telecommunications service provider.

Fig. 6 is yet another portion of fully developed six level diagnostic tree for analyzing the average revenue per user of a telecommunications service provider.

### DETAILED DESCRIPTION OF THE DRAWINGS AND THE PRESENTLY PREFERRED EMBODIMENTS

The present invention relates to an analytic tool for investigating and analyzing a business's revenue sources. The tool provides an interactive revenue diagnostic tree which decomposes a business's revenue stream into constituent components. Individual revenue sources can be analyzed on a per customer or per user basis. The tool is capable of calculating and displaying the average revenue per user (ARPU) of the various products and services that comprise the sources of the various contributory revenue streams. Actual ARPU values may be compared to forecasted values or industry averages for like products or services. An ARPU gap may be calculated based on the differences between the actual ARPU values and the forecasted or industry average values. The ARPU gap may provide a simple quick measure of the overall performance of a revenue stream.

The present tool is adapted to be interactive. A user may elect to view ARPU data at various levels of de-composition. If an intermediate level is displayed, the ARPU, ARPU reference and ARPU gap values are calculated and displayed for whichever level is chosen. This feature allows the user to examine the revenue stream at multiple different stages. Further, the user may filter the ARPU data by various customer attributes in order to investigate ARPU among various segments of the customer population.

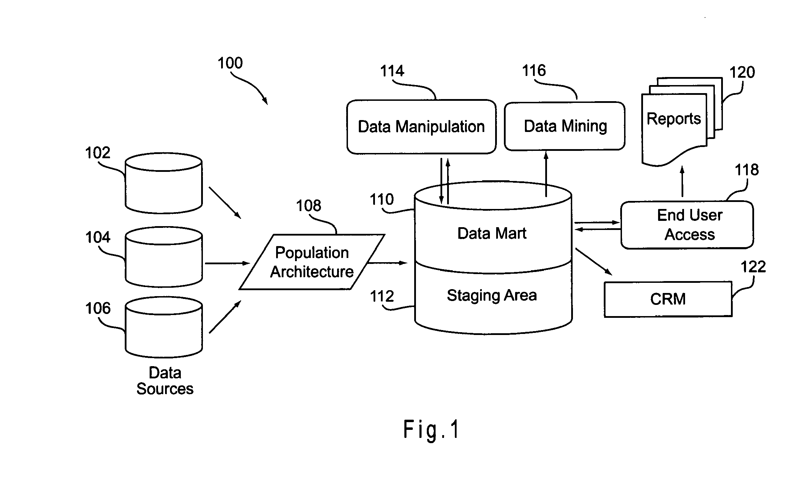

Fig. 1 shows a block diagram of the system architecture 100 of a system for boosting ARPU.

The diagnostic tree of the present invention is among the many ARPU boosting tools provided by the system architecture 100. The system architecture 100 includes a plurality of data sources 102, 104, 106. A dedicated data mart 110 forms the core of the system architecture 100. A population architecture 108 is provided to perform extraction, transformation and loading functions for populating the data mart 110 with the data from the various data sources 102, 104, 106. A data manipulation module 114 prepares data stored in the data mart 110 to be input to other applications such as a data mining module 116 and an end user access module 118, or other applications. The end user access module 118 provides an interface through which business users may interact with, view and analyze the data collected and stored in the data mart 110. The end user access module 118 may be configured to generate a plurality of predefined reports 120 for analyzing the data. Among the reports included in the user access module is the revenue diagnostic tree analysis which forms the output of the present analytic tool. The user access module 118 includes online analytical processing (OLAP) that allows a user to manipulate and contrast data "on-the-fly" to gain further insight into revenue data, historical trends, and the characteristics of customers who have responded positively to ARPU stimulation efforts in the past. External systems such as CRM 122 may also consume the data stored in the data mart 110.

In order to support ARPU boosting methods and the diagnostic tree analysis of the present invention, the data mart 110 must be populated with revenue and customer data for each customer in the customer base. Revenue data may be provided by the enterprise billing system. Customer demographics, geographic data, and other data may be provided from a customer relationship management system (CRM). If the enterprise is a telecommunications services provider, usage patterns, traffic and interconnection data may be provided directly from network control systems. Alternatively, all or some of the data necessary to populate the data mart 110 may be provided by a data warehouse system or other mass storage system.

According to an embodiment, the data requirements of the system architecture 100 are pre-configured and organized into logical flows, so that the data source systems 102, 104, 106, etc., supply the necessary data at the proper times to the proper location. Typically this involves writing a large text file (formatted as necessary) containing all of the requisite data to a designated directory. In order to duplicate the decomposition tree the revenue data must be broken down by each service, and each value identified by customer. Because of the monthly billing cycle of most enterprises the data typically will be extracted on a monthly basis to update the data mart 110.

The population architecture 108 is an application program associated with the data mart 110. The population architecture is responsible for reading the text files deposited in the designated directories by the various data sources at the appropriate times. The population architecture may perform quality checks on the data to ensure that the necessary data are present and in the proper format. The population architecture 108 includes data loading scripts that transform the data and load the data into the appropriate tables of the data mart's 110 data model.

The data mart 110 is a traditional relational database and may be based on, for example, Oracle 9i or Microsoft SQL Server platforms. The data mart 110 is the core of the system architecture 100. The customer and revenue data are optimized for fast access and analytic reporting according to a customized data model. Star schemas allow an efficient analysis of key performance indicators by various dimensions. Flat tables containing de-normalized data are created for feeding predictive modeling systems.

The end-user access module 118 pulls data from the data mart 110 to be displayed in the diagnostic tree. The end user access module 118 includes online analytical processing capabilities based on market standard reporting software. Because all of the data are accumulated and stored on a customer by customer basis, the online analytical processing capabilities of the end user access module 118 allow the end user to alter display criteria and filter customers by various customer attributes to significantly expand the business intelligence insights that may be gleaned from the diagnostic tree.

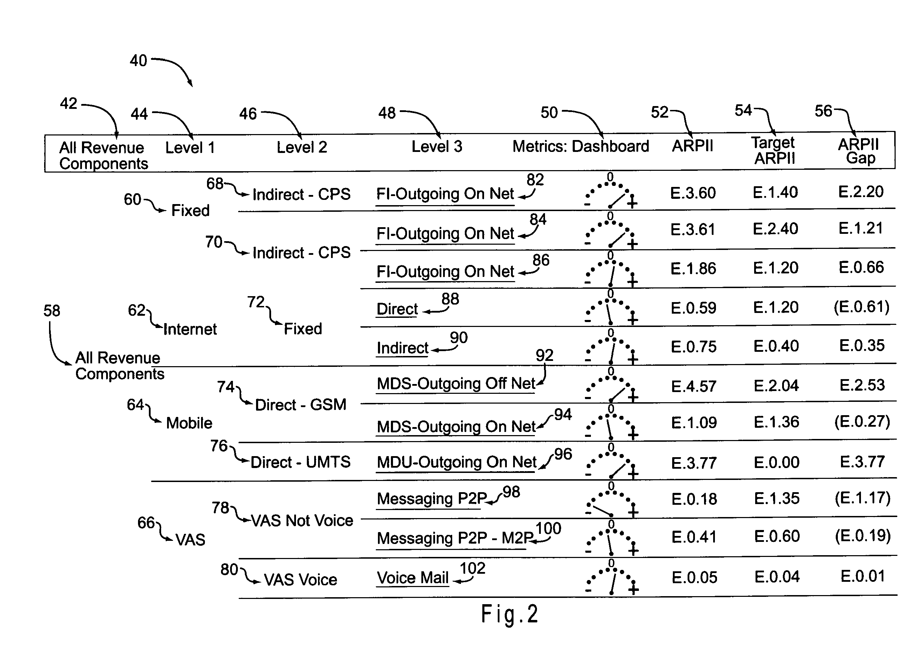

An example of an interactive diagnostic tree display 40 is shown in FIG. 2. The diagnostic tree breaks down an enterprise's revenue stream along product or service lines into narrower and narrower revenue components as one moves further up the diagnostic tree. The diagnostic tree 40 shown in FIG. 2 has been generated to illustrate the revenue stream of a telecommunications service provider (Telecom). The diagnostic tree 40 shows the Telecom's revenue stream decomposed down to three levels of detail. A first column 42 includes all revenue components. A second column 44 shows Level 1 revenue components. These include revenue from: fixed (land-line) phone services 60; Internet services 62; mobile telephone services 64; and value added services (VAS) 66. A third column 46 shows Level 2 revenue components. In Level 2 revenue from fixed services has been broken out into: Indirect - Carrier Pre Selection (CPS) 68, and Indirect - Carrier Selection (CS) 70 components. Internet revenue 62 has only one level 2 component, namely Fixed Revenue 72. Mobile services revenue 64 is broken out into Direct - GSM 74 and Direct - UMTS components in Level 2. Level 1 VAS 66 is broken out into VAS Not-Voice 78, and VAS Voice 80 components in Level 2. A fourth column 48 shows Level 3 revenue components. In Level 3 the Fixed Indirect - CPS revenue component 68 corresponds to a single component FI-Outgoing On Net 82. The Fixed Indirect - CS Level 2 revenue component 70 is broken out into FIC Outgoing Off Net 84, and FIC Outgoing On Net 86 in Level 3. Revenue from Level 2 Internet Fixed 72 services is broken out into Direct 88 and Indirect 90 revenue components. Mobile Direct - GSM 74 revenue is broken out into MDS-Outgoing Off Net 92, and MDS-Outgoing On Net 94 in Level 3. Mobile Direct UMTS Level 2 revenue has a single level 3 component MDU-Outgoing On Net 96. Level 2 Value Added Services Not Voice 78 include level 3 revenue components Messaging P2P 98, and Messaging P2P-M2P 100. Finally, VAS Voice 80 includes the sole level 3 revenue component Voice Mail 102.

The diagnostic tree 40 displays the calculated average revenue per user (ARPU) for each revenue component displayed in Level 3 in the sixth column 52. The diagnostic tree also displays a target or reference ARPU value for each revenue component displayed in level 3 in the seventh column 54. The next column 56 displays the ARPU gap between the actual ARPU value and the target or reference ARPU value for each revenue component displayed in level 3. A "Dashboard" icon is displayed in column 50 for each revenue component displayed in level 3. The "DASHBOARD" icon provides a quick visual indication of the size of the ARPU gap (column 56) for each data stream and whether the gap is positive or negative.

As described above, the system architecture 100 supporting the diagnostic tree analysis calculates the ARPU values displayed in column 52 directly from customer invoice data each month. The target ARPU values in column 54 may be based on market forecasts, performance goals, industry averages or other benchmarks. According to an embodiment, the diagnostic tree 40 is a dynamic, interactive tool. A user may select the level for which ARPU data are to be displayed via the interface provided by the user access module 118. For example, selecting level 2 will cause ARPU values, ARPU reference values, and ARPU gap values to be displayed for each revenue stream identified in level 2. In this case, the ARPU, ARPU reference and ARPU gap values displayed will represent the aggregate ARPU, ARPU reference and ARPU gap values from all of the revenue streams that contribute to the displayed level 2 components. Alternatively, or in addition to displaying different levels of ARPU analysis, a user may choose to view ARPU data for only a certain segment of the customer population. For instance, a user may choose to view level 2 ARPU data for all male customers age 25-34. In this case, the column 58 displaying level 3 information would not be displayed, and column 52 would display ARPU data for the level 2 revenue components only. Further, the ARPU data in column 52 would be calculated only from male customers aged 25-34.

The diagnostic tree provides marketers and business users a quick visual indication of which components of the revenue stream are performing well and which are in need of ARPU stimulation. Those revenue components for which the ARPU gap is positive are performing better than forecast or better than the industry trend, and those for which the ARPU gap is negative are performing worse. The revenue components having a negative ARPU gap are obvious targets for ARPU boosting efforts.

The revenue streams defined in FIG. 2 are based on a detailed analysis of the revenue received by telecommunications service providers. The value of the diagnostic tree analysis of the present invention is based in large part on the logical breakdown of the revenue streams into their individual components. Such revenue breakdowns will vary from industry to industry, and from enterprise to enterprise depending on the nature and mix of products and services sold by the enterprise. An embodiment of a diagnostic tree according to the invention has been configured to extend to six levels of revenue stream decomposition. It has been determined that 6 levels is sufficient to characterize the revenue streams of most enterprises. Of course other embodiments may be devised having more or fewer levels of detail without deviating from the spirit or scope of the invention.

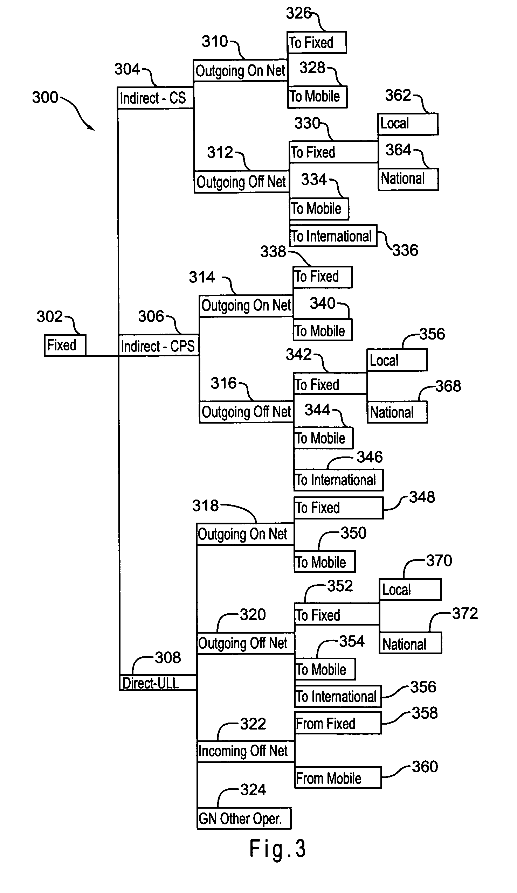

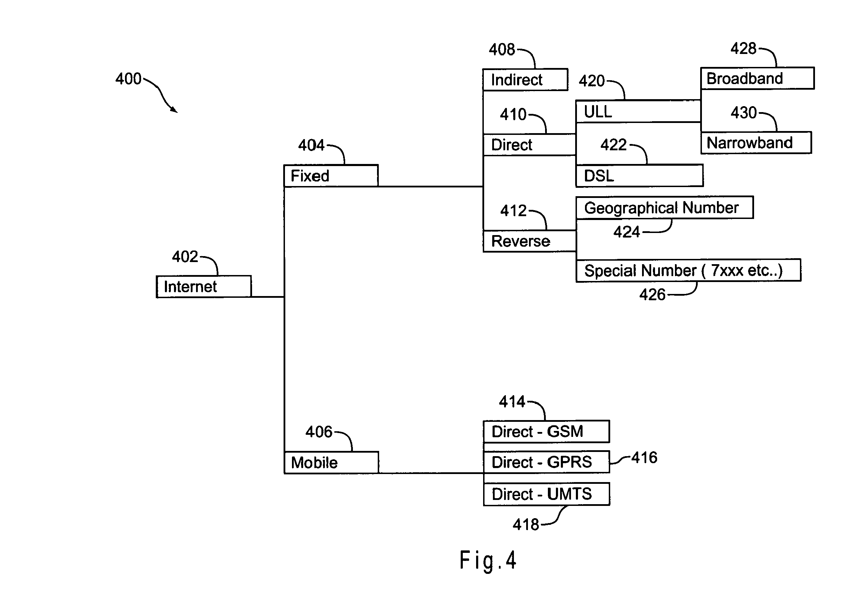

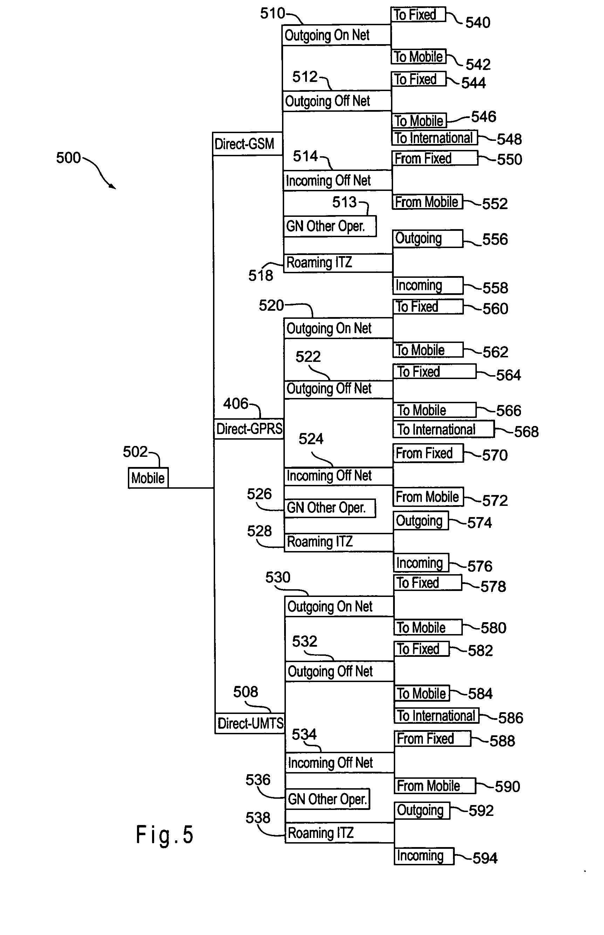

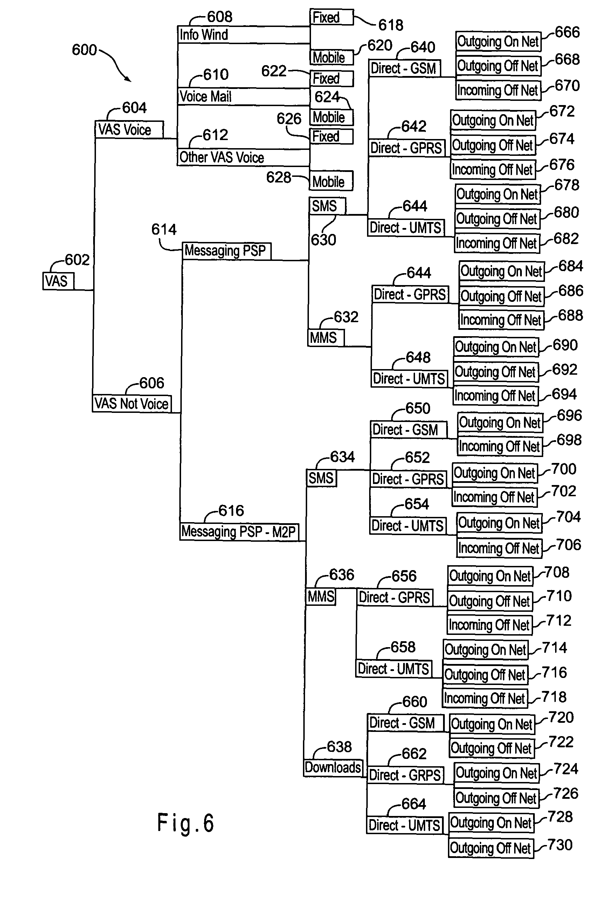

FIGS. 3, 4, 5 and 6 each show a portion of a complete six level revenue diagnostic tree for analyzing and displaying the ARPU values for a telecommunications service provider's entire revenue stream. Because of the size of the tree it has been divided between the four figures. Each figure displays a single first level revenue stream and all of its lower level components. The level 1 revenue streams are the same as those shown in FIG. 2. Thus, FIG. 3 shows the portion of the decomposition tree 300 relating to Fixed Communications revenue 302. FIG. 4 shows the portion of the decomposition tree 400 relating to Internet revenue 402. FIG. 5 shows the portion of the decomposition tree 500 relating to Mobile Communication Services revenue 502. And FIG. 6 shows the portion of the decomposition tree 600 relating to Value Added Services (VAS) revenue 602. Each portion of the overall revenue stream will be described in turn.

Turning first to FIG. 3, Level 1 relates to revenue from Fixed wire line communications services 202. Fixed service revenue 202 is split into three Level 2 components Indirect - CS 304, Indirect - CPS 306, and Direct-ULL 308. Level 2 indirect - CS revenue 304 is split into an Outgoing On Net component 310 and an Outgoing Off-Net Component 312 in Level 3. The Level 3 Outgoing On-Net component 310 is in turn split into To Fixed 326 and To Mobile 328 components in Level 4. The Outgoing Off Net Level 3 component 312 is broken out in Level 4 into To Fixed 326, To Mobile 334 and To International 336. The Level 4 Outgoing Off-Net To Fixed 330 revenue is further broken out into Local 362 and National 364.

The Level 2 component of fixed communication services Indirect CPS 306 is broken out into Outgoing On - Net 314 and Outgoing Off - Net 216 in Level 3. The Level 3 Outgoing On - Net Revenue 314 is broken out into To Fixed 338 and To Mobile 340 components in Level 4. The outgoing Off - Net revenue 316 is broken out into To Fixed 342, To Mobile 344, and To International 346 in Level 4. The Outgoing Off - Net To Fixed 342 revenue of Level 4 is further broken out into Local 366 and National in Level 5.

The Level 2 component of Fixed communications services revenue Direct-ULL 308 is broken out in Level 3 into Outgoing On Net 318, Outgoing Off-Net 320, Incoming Off-Net 322 and GN Other Operations 304. The Level 3 Outgoing On-Net 318 revenue is broken out into To Fixed 348 and To Mobile 350 in Level 4. The Level 3 Outgoing Off Net 320 revenue is broken out into To Fixed 352, To Mobile 354 and To International 356 components in Level 4. The Level 4 Direct Outgoing Off-Net To Fixed revenue 352 is further broken out into Local 370 and National 272 components in Level 5. The Level 3 Fixed Direct-ULL Incoming Off Net revenue 322 is broken out into From Fixed 358 and From Mobile 360. The Level 3 GN Other Operations 324 are broken out no further.

Turning to FIG. 4, the portion of the diagnostic tree 400 relating to Level 1 Internet revenue 402 is displayed. In Level 2 internet revenue is divided between Fixed 404 and Mobile 406 components. The Level 2 Internet Fixed 402 revenue is further broken out into Indirect 408, Direct 410, and Reverse 412 components in Level 3. The Level 3 Internet Fixed Indirect 408 revenue is broken out no further. The Level 3 Internet Fixed Direct revenue is broken out into ULL (Unbundling of Local Loop) 420 and DSL (Digital Subscriber Line) 422 components in Level 4. The Level 4 ULL 420 revenue is further broken out into Broad Band 428 and Narrow Band 430 components in Level 5. The Level 3 Internet Fixed Reverse 412 revenue is broken out into Geographical Number 424 and Special Number 426 components in Level 4. The Level 2 Internet Mobile revenue 406 is broken out into Direct-GSM 414, Direct-GPRS 416 and Direct-UMTS 418 components in Level 3. The Internet Mobile revenue streams are not further divided beyond Level 3.

Turning now to Fig. 5, the portion of the diagnostic tree 500 stemming from Mobile revenue 502 is displayed. In Level 2 the Mobile 502 revenue is broken out into Direct-GSM 504, Direct-GPRS 506, and Direct-UMTS 508 components. In Level 3 the Level 2 Mobile Direct-GSM 504 revenue is further broken out into Outgoing On Net 510, Outgoing Off Net 512, incoming Off Net 514, GN Other Operations 516, and Roaming ITZ 518 components. The three letter code, in this case ITZ, identifies the country in which revenue from roaming charges are incurred. Here for example ITZ relates to revenue from roaming charges incurred in Italy. In Level 4 the Level 3 Mobile-direct-GSM Outgoing On Net 510 revenue is further broken out into To Fixed 540 and To Mobile 542 components. The mobile Direct-GSM Outgoing Off Net 512 revenue of Level 3 is broken out in Level 4 into To Fixed 544, To Mobile 546, and To International 548 components. The Level 3 Mobile Direct-GSM Incoming Off Net 514 is broken out into From fixed 550 and From mobile 552 components in Level 4. Mobile Direct-GSM GN Other Operations 516 revenue is not broken out beyond Level 3. The Mobile Direct-GSM Roaming ITZ 518 revenue of Level 3 is broken out in Level 4 into Outgoing 556 and Incoming 558 components.

The Level 2 Mobile Direct-GPRS 406 revenue is broken out in Level 3 in the same manner as the Mobile-Direct-GSM 504 revenue stream described above. Thus, the Mobile Direct GPRS 406 revenue stream is broken out in Level 3 into Outgoing On Net 520, Outgoing Off Net 522, Incoming Off Net 524, GN Other Operations 526, and Roaming ITZ 528 components. The Level 3 Mobile Direct-GPRS Outgoing On Net 520 revenue is broken out into To Fixed 560 and To Mobile 562 components in Level 4. Level 3 Mobile Direct-GPRS Outgoing Off Net 522 revenue is broken out into To Fixed 564, To Mobile 566, and To International 568 components in Level 4. Level 3 Mobile Direct-PRS Incoming Off Net 524 revenue is broken out into From Fixed 570 and From Mobile 572 components in Level 4. Mobile direct-GPRS GN Other Operations 526 revenue is not broken out beyond Level 3. Level 3 Mobile Direct-GPRS Roaming ITZ 528 revenue is broken out into Outgoing 574 and Incoming 576 components in Level 4.

The Level 2 Mobile Direct-UMTS 508 revenue stream is broken out in Levels 3 and 4 in the same manner as the Mobile Direct GSM 504 revenue stream and the Mobile Direct-GPRS 506 revenue stream described above. Thus, the Mobile Direct-UMTS 508 revenue stream is broken out in Level 3 into Outgoing On Net 530, Outgoing Off Net 532, Incoming Off Net 534, GN Other Operations 536 and Roaming ITZ 538 components. The Level 3 Mobile Direct-UMTS Outgoing Off Net 530 revenue stream is further broken out into To Fixed 578 and To Mobile 580 components in Level 4. The Level 3 Mobile Direct-UMTS Outgoing Off Net 532 revenue stream is broken out into To Fixed 582, To Mobile 584, and To International 586 components in Level 4. The Level 3 Mobile Direct - UMTS Incoming Off Net 534 revenue stream is broken out into From Fixed 588 and From Mobile 590 components in Level 4. The Level 3 Mobile Direct-UMTS GN Other Operations 536 revenue stream is not broken out beyond Level 3. The Level 3 Mobile Direct-UMTS roaming ITZ 538 revenue stream is broken out into Outgoing 592 and Incoming 594 components in Level 4. This completes the decomposition of the Mobile 502 revenue stream.

Last we turn to Fig. 6 which shows the portion 600 of the diagnostic tree stemming from Value Added Services (VAS) 802. In Level 2 VAS revenue is broken out into VAS Voice 604, and VAS Not Voice components. In Level 3 VAS Voice 604 is further broken out into Voice Mail 610, and Other VAS Voice 612 components. Level 3 Voice Mail 610 revenue is broken out in Level 4 into Fixed 622 and Mobile 626 components. Similarly, Level 3 Other VAS Voice 612 revenue is broken out into Fixed 626 and Mobile 626 components as well.

The decomposition of the Level 2 VAS Not Voice 606 component of the VAS 602 revenue stream is somewhat more complex. The Level 2 VAS Not Voice 606 revenue is broken out in Level 3 into Messaging P2P (peer to peer) 614 and messaging P2M-M2P (peer to machine-machine to peer) 616. Level 3 Messaging P2P 614 is broken out into SMS 630 and MMS 632 components in Level 4. Level 4 SMS 630 revenue is broken out into Direct-GSM 640, Direct-GPRS 642, and Direct-UMTS 644 components in Level 5. Furthermore, SMS Direct-GSM 640 is broken out into Outgoing On Net 666, Outgoing Off Net 668, and Incoming Off Net 670 components in Level 6. Similarly SMS Direct-GPRS 642 is broken out into Outgoing On Net 672, Outgoing Off Net 674 and Incoming Off Net 676 components in Level 6. SMS-Direct-UMTS 644 is broken out into Outgoing On Net 678, Outgoing Off Net 680, and Incoming Off Net 682 component. Level 4 messaging P2P MMS revenue 632 is broken out into Direct-GPRS 646 and direct-UMTS 648 components in Level 5. In Level 6 MMS Direct-GPRS 646 is broken out into Outgoing On Net 684, Outgoing Off Net 686, and Incoming Off Net 688 components. MMS direct-UMTS 648 is similarly broken out into Outgoing On Net 690, Outgoing Off Net 692, and Incoming Off Net 694 components in Level 6.

The VAS Not Voice Messaging P2M-M2P 616 Level 3 revenue stream is further broken out into SMS 634, MMS 636 and Downloads 638 components in Level 4. Like the Messaging P2P SMS 630 revenue stream and the Messaging P2P MMS 632 revenue stream, the Messaging P2M-M2P SMS 634 revenue steam is broken out into Direct-GSM 650, Direct-GPRS 652, and Direct-UMTS 654 components in Level 5. Messaging P2M-M2P MMS 636 revenue is broken out into Direct-GPRS 656 and Direct-UMTS 658 components in Level 5. Messaging P2M-M2P downloads 638 revenue is broken out into Direct-GSM 660, Direct GPRS 662, and Direct-UMTS 664 components in Level 5. The messaging P2M-M2P SMS - Direct GSM 650 revenue of Level 5 is further broken out into Outgoing On Net 696 and Incoming Off Net 698 components in Level 6. The messaging P2M-M2P SMS Direct-GPRS 652 revenue is also broken out into Outgoing On Net 700, and Incoming Off Net 702 components in Level 6. Messaging P2M-M2P SMS direct-UMTS 654 revenue is similarly broken out into Outgoing On Net 704 and Incoming Off Net 706 components in Level 6. The Level 5 messaging P2M-M2P MMS Direct-GPRS 656 revenue is broken out in Level 6 into Outgoing On Net 708, Outgoing Off Net 710, and Incoming Off Net 712 components. Similarly, Messaging P2M-M2P MMS Direct-UMTS 658 revenue is broken out into Outgoing On Net 714, Outgoing Off Net 716, and Incoming Off Net 718 components in Level 6. The Downloads Direct-GSM 660 revenue of Level 5 is further broken out into Outgoing On Net 720 and Outgoing Off Net 722 components in Level 6. Similarly downloads Direct-GPRS 662 revenue is broken out into Outgoing On Net 724 and Outgoing Off Net 726 Level 6 components. Lastly, Downloads Direct-UMTS 664 revenue is broken out into Outgoing On Net 728 and Outgoing Off Net 730 components in Level 6.

The revenue diagnostic tree just described and displayed in Figs. 3-6 represents a preferred breakdown of a Telecom's revenue stream. Of course businesses in other industries would necessarily breakdown their revenue streams differently to reflect the nature of the products and services they offer. Furthermore, Telecoms themselves may choose to build revenue diagnostic trees that differ from that described herein. Regardless of the particular manner in which the revenue streams are decomposed and the component revenue streams defined, the purpose of the diagnostic tree is to break down revenue streams in smaller more meaningful units. This allows the revenue from the various component streams to be evaluated on a per user basis. Evaluating the performance of the various revenue streams on this basis a user may identify revenue streams that are performing poorly, and those that are performing well from a customer perspective. Such information can be an important factor in developing marketing strategies for increasing revenue.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. An analytic tool for analyzing revenue, the tool comprising:
a data storage device (110) adapted to receive and store customer and revenue data;
a data manipulation module (114) associated with the data storage device (110) for deriving calculated values from data stored in the data storage device (110);
an interface device (118) for interacting with a user and displaying data including calculated values stored in the data storage device, the interface device (118) being adapted to display a diagnostic tree (40) representing an enterprise's revenue stream de-composed into a plurality of contributory revenue components (60, 62, 64, 66) and a calculated value associated with revenue generated from one or more contributory components.

2. The analytic tool of claim 1 further comprising an population module (108) for extracting the customer and revenue data from external systems (102, 104, 106), transforming said data, and loading said data into said data storage device (110).

3. The analytic tool of claim 1 wherein the data manipulation module (114) is adapted to calculate an average revenue per user value (52) for components of the enterprise's revenue stream.

4. The analytic tool of claim 3 wherein the data storage device (110) is adapted to store an average revenue per user reference value (54) for components of the enterprise's revenue stream, and the data manipulation module (114) is adapted to calculate an average revenue per user gap (56) for said components of the enterprise's revenue stream based on differences between the average revenue per user (52) and the average revenue per user reference (54) values of the components of the enterprise's revenue stream.

5. The analytic tool of claim 4 wherein the interface device (108) is adapted to perform on-line analytical processing such that a user may select a level of decomposition (44, 46, 48) of the diagnostic tree (40) to be displayed, and the average revenue per user (52), the average revenue per user reference (54) and the average revenue per user gap (56) values are calculated and displayed for the components of the enterprise's revenue stream a the selected level of decomposition (44, 46, 48).

6. The analytic tool of claim 4 wherein the interface device (108) is adapted to perform on-line analytical processing such that a user may select a customer attribute and the average revenue per user (52), the average revenue per user reference (54), and the average revenue per user gap (56) values displayed will be calculated and displayed for customers sharing the selected attribute.

7. The analytic tool of claim 1 wherein the diagnostic tree (40) representing an enterprise's revenue stream divides the enterprise's revenue stream into up to six de-composition levels.

8. The analytic tool of claim 1 wherein the enterprise comprises a telecommunications service provider.

9. The analytic tool of claim 8 wherein a first decomposition level (44) of the diagnostic tree (40) divides the telecommunications service provider's revenue stream into fixed (60), mobile (62), internet (64) and value added services (66) components.

10. A revenue analysis tool comprising:
a data storage device (110) for storing customer and revenue data;
an access module (118) adapted to receive data from the data storage device (110), the access module (118) including a processor and processing instructions for generating a diagnostic tree (40) representing an enterprise's revenue stream, the diagnostic tree (40) including average revenue per user values for components of the enterprise's revenue stream derived from data stored in the data storage device (110); and
an interface for displaying the diagnostic tree (40) and allowing a user to select portions (300, 400, 500, 600) of the diagnostic tree (40) to be displayed, and wherein the average revenue per user values are calculated and displayed for components of the revenue stream contained in the portion (300, 400, 500, 600) of the diagnostic tree selected to be displayed.

11. The revenue analysis tool of claim 10 wherein the diagnostic tree (40) includes multiple levels, each level de-composing one or more components of the revenue stream into one or more narrower components more closely related to a specific revenue source.

12. The revenue analysis tool of claim 11 wherein the diagnostic tree (40) includes up to six levels, and wherein the number of levels displayed by the interface is user selectable.

13. The revenue analysis tool of claim 12 wherein the average revenue per user values (52) are calculated and displayed based on the number of levels of the diagnostic tree (40) selected to be displayed.

14. The revenue analysis tool of claim 10 further comprising a population module (108) for extracting customer and revenue data from external devices (102, 104, 106) and loading the customer and revenue data into the data storage device (110).

15. The analytic tool of claim 10 wherein the interface is adapted to display an average revenue per user reference value (54) corresponding with the average revenue per user values (52) calculated and displayed for components of the revenue stream contained within the portion (300, 400, 500, 600) of the diagnostic tree (40) selected to be displayed.

16. The analytic tool of claim 15 wherein the interface is further adapted to display an average revenue per user gap value (56) based on the difference between the average revenue per user values (52) and the corresponding average revenue per user reference values (54) for the components of the revenue stream contained within the portion (300, 400, 500, 600) of the diagnostic tree selected to be displayed.

17. A method of analyzing revenue comprising:
constructing a diagnostic tree (40) depicting an enterprise's revenue sources (102, 104, 106) divided into a plurality of separate revenue components (58);
receiving customer and revenue data;
allocating revenue to appropriate revenue components of the diagnostic tree (40) based on customer use of products or services associated with revenue components;
calculating an average revenue per user (52) of the products or services associated with the revenue components; and
displaying at least a portion (300, 400, 500, 600) of the diagnostic tree (40), including an average revenue per user value (52) for products or services associated with a revenue component included in the portion (300, 400, 500, 600) of the diagnostic tree (40) displayed.

18. The method of claim 17 further comprising providing an average revenue per user reference value (54) associated with the revenue components, and calculating an average revenue per user gap value (56) based on a difference between the average revenue per user (52) and the average revenue per user reference (54) values associated with the revenue components.
